# EUROPEAN PATENT SPECIFICATION

(11) **EP 0 667 021 B1**
(45) Date of publication and mention of the grant of the patent: **02.04.1997**
(21) Application number: 93924529.6
(22) Date of filing: 26.10.1993
(51) Int. Cl.: G09F 9/35

(54) **ELECTRONIC DISPLAY AND/OR APPARATUS HAVING SUCH A DISPLAY**
ELEKTRONISCHE ANZEIGEVORRICHTUNG UND MIT EINER SOLCHEN VORRICHTUNG VERSEHENE ANLAGE
AFFICHAGE ELECTRONIQUE ET/OU DISPOSITIF COMPORTANT UN AFFICHAGE

(30) Priority: 28.10.1992 DK 1318/92
(43) Date of publication of application: 16.08.1995
(73) Proprietor: PEDERSEN, Kjeld, 3460 Birkerod (DK)
(72) Inventor: PEDERSEN, Kjeld, DK-3460 Birkerod (DK); RASMUSSEN, Henrik, Find, Lindskov, DK-3450 Aller d (DK)
(74) Representative: Plougmann, Vingtoft & Partners A/S
(86) International application number: DK9300341
(87) International publication number: WO9410668

(56) References cited:
- DE-A- 3 633 708

## Description

The invention relates to an electronic display for displaying signs, graphics, pictures, symbols etc.

Such displays are for example used in connection with various types of electric or electronic apparatuses such as measuring apparatuses, calculators etc. where the power supply to the apparatus and the display function by the use of radiation-sensitive power generators, for example in the form of one or more solar cells or solar cell panels. Such apparatuses are often small and portable. The term solar cells will at all times be used in the present application of any type of radiation-sensitive power generators which convert radiation, for example light, into electric power. The combination of solar cells and one or more displays is usually applied in connection with a store for electric energy, for example a condenser battery or a rechargeable battery, which in a known manner will operate as a buffer so that the apparatus will also operate during periods of less or no radiation on the solar cells.

The term display is used in the present application as a common term of any type of electronic, controllable display panel or display screen for displaying signs, graphics, pictures, symbols etc.

In the known apparatuses the display and the solar cells are arranged in respective openings which must both be protected against the surroundings with protective glass or the like. This has economic as well as design-related drawbacks, will increase the production costs of the cabinet, may cause space problems inside and outside the apparatus and may result in the application of an unnecessarily big cabinet for the apparatus in order to accomodate the solar cells, the display and what must otherwise be accessible on the cabinet.

Display and solar cells are also seen to be arranged immediately next to each other in a cabinet and protected by one and the same cover glass to reduce space consumption. Since a display and the cover glass of a solar cell do not require quite the same optical properties, there may be a number of technical and economical drawbacks in arranging them side by side and under a common cover glass.

The specification of US patent no. 4,882,471 describes an electronic apparatus with a display which is supplied with power from one or more solar cells. It is suggested therein that space may be saved by arranging the solar cells on the rear of the housing of the apparatus, namely under the display. Such a structure is of no particularly great practical importance since by normal use of the apparatus the solar cells will not generate sufficient power because the cells are not exposed when the apparatus is for example placed on a support. This structure will also necessitate an opening for the solar cells on the rear of the housing of the apparatus which has many drawbacks both technically and designwise.

A method and a radiation-sensitive generator are provided, according to a first embodiment of the invention, which are defined in claims 1 and 8 respectively.

An electronic display, according to a second embodiment of the invention and with the features stated in the characterising part of claim 1, is advantageous in that it is possible to place the display and the solar cell on the same side of the housing of the apparatus and immediately over each other thereby avoiding many of the known drawbacks and providing a far higher degree of freedom when designing the cabinet of the apparatus. The cabinet will become cheaper to produce with only one opening for the display and may usually be designed smaller which will also reduce costs. Another important advantage is that it is possible to apply a solar cell area which is just as big as the display without additional space consumption which will usually amount to an increase of the solar cell area and provide increased and improved power supply of the circuit of the apparatus. An increase of the solar cell area will also permit extended working time without exposure since an energy store with a higher capacity may be applied.

By designing the display according to the invention as disclosed in the characterising part of claims 15-17, there is obtained a simple and efficiently operating display system which can be used everywhere. The display system takes up less space than the known ones and provides increased freedom designwise.

By designing the display according to the invention as disclosed in the characterising part of claim 18, there is obtained a unit which is very compact and of small thickness and which may be used instead of the known displays.

If the display according to the invention is designed as disclosed in the characterising part of claim 19 or claim 20, there is obtained a quite new and highly compact component available to manufacturers and designers of electronic and electric apparatuses.

The display according to the invention will not only provide design-related and space-related advantages but will also permit simplified mounting since the supply lines to the display and to the solar cells may be designed as known contact plugs, soldered joints etc.

The display according to the invention is preferably, but not exclusively, adapted for use in connection with electronic apparatuses as disclosed in the characterising part of claim 21. Such apparatuses are very often portable but may also be stationary, for example in places without electricity supply or in places with unstable electricity supply.

### The drawing

An embodiment of the invention will now be explained further with reference to the drawing wherein
- fig. 1: is an electronic apparatus with a display according to the invention,
- fig. 2: is a schematic drawing of the display in fig. 1, but shown at a larger scale, and
- fig. 3: is a cross section of an integrated display with a solar cell according to another embodiment of the invention.

### Description of the embodiments

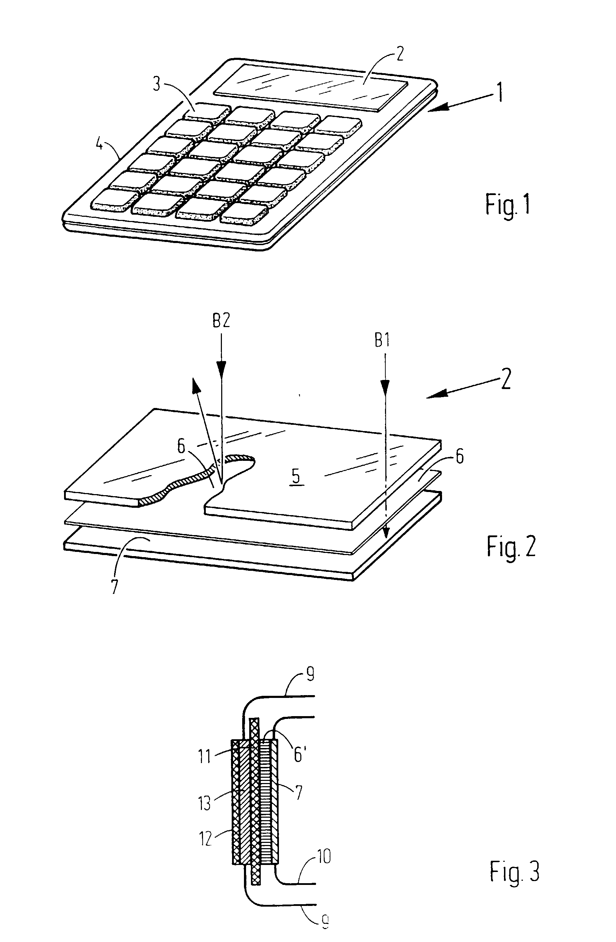

Fig. 1 shows an electronic apparatus 1 which may for example be a calculator, a measuring apparatus or the like arranged in a cabinet 4 with a keyboard 3 and display 2 according to the invention.

The invention will now be explained in connection with a display 2 in the form of an LCD (Liquid Crystal Display) display. From the following explanation it will be obvious to a person skilled in the art that also other display types may be used without departing from the basic idea of the invention and obtaining the advantages of the invention but that there are particular additional advantages in using an LCD display.

The display 2 comprises a solar cell panel (not immediately visible in fig. 1) arranged behind the display face and which supply power to the display and the electronic circuit in the apparatus. In order to improve the power supply the apparatus also comprises some form of store for electricity, for example a condenser battery, a rechargeable battery or the like, designed and dimensioned in a generally known manner.

The cabinet 4 has thus only one opening for the display with solar cells and one cover glass therefor.

Fig. 2 shows in greater detail the principles of a display according to the invention. The plate 5 is an LCD display provided at its rear face with a plate 6 which is a combined filter/reflector layer. In a common LCD display the incident daylight is reflected by a reflector, usually a silver foil or the like, which is attached to the rear face of the display. When a digit or a sign is activated electrically, the reflector effect of the crystal in front of the reflector is removed whereby the digit or the sign becomes visible. The filter/reflector 6 has among other things this function. Additionally, the layer 6 also has the function of allowing radiation to penetrate same to a solar cell or a solar cell panel 7, for example a silicon-planar solar cell with maximum sensitivity at about 900nm (nanometre) wavelength.

A radiation B1, for example infrared light from the daylight, within the range of 750-1100nm may thus penetrate the dipslay 5 and the filter/reflector layer 6 to the solar cell panel 7 so that the solar cell panel may generate electric power. The damping here should be less than 20% so as to ensure that the solar cell 7 can produce the required energy.

A radiation B2, for example daylight, in the range of 300-750nm will be reflected from the filter/reflector layer 6, and it is this reflection which is prevented when a digit or the like in the LCD display is activated. The reflection from the layer 6 for the wave range in question should be higher than 80% to achieve a good contrast.

If, for example, the filter/reflector layer 6 is designed as a so-called cold mirror, for example of gallium arsenide coated on a glass plate, it is possible to achieve a reflection efficiency close to 99% for wavelengths within the range of 300-750nm and a transmission loss of max. 7-10% within the range of 750-1100nm.

Fig. 2 moreover shows that it is possible to apply a solar cell panel 7 with the same physical extent as the LCD layer 5 and thereby allow a larger solar cell area which will result in a higher production of electric power.

Modified properties, including improved optical properties may also be achieved by inserting further layers between the LCD layer 5 and the solar cell 7 for improving the contrast of the display if the contrast is not sufficient.

Fig. 3 shows a plane cross section of an integrated unit comprising an LCD display 5 and a solar cell panel 7. In front of the unit there is arranged a cover glass 12 which may form one side of the LCD display. The layer 11 at the centre of the unit is likewise a glass plate carrying the crystal layer 13 on one side and the other side thereof carrying the coated filter 6'. Commonly known supply lines 9 at a sufficient number to form the symbols or signs desired lead to the crystal layer, and the solar cell panel 7 likewise comprises connecting parts 10. The unit shown in fig. 3 is therefore an integrated unit with display, power supply and contact plugs or the like ready for mounting in an electronic apparatus.

The construction of the LCD unit itself is not further explained since it is designed in a generally known manner, for example as further explained in Basic Guide, Liquid Crystal Displays, 1989, by LXD, Inc., 24500 Highpoint Road, Beachwood, Ohio 44122.

The solar cell or solar cell panel 7 is not further explained either, either regarding construction or function, since they are designed according to generally known technology within the area, for example as described in data sheets from Kodenshi Corp., Japan, for example the types SSC-8-85LH and SSC-D8-85LH.

Practical tests with known LCD crystal displays and known solar cells where between the display and the solar cell there is inserted a filter, for example solar filter film type P18 from 3M, have shown that the combined display-solar cell operates as desired with useful contrast as well as sufficient light transmission to the solar cell. By the test there was used a display from LXD, Inc. where the reflector was removed and replaced by a piece of P18 solar filter film and immediately behind same there was arranged a common solar cell from a small pocket calculator. The test showed that the contrast on the display was sufficient and that there is achieved an acceptable transmission to the solar cell even though the filter material in question is not directly intended for such application.

## Claims

1. A method of operating a radiation-sensitive power generator, such as a solar cell, comprising supplying radiation thereto through a radiation filter having a wavelength-dependent radiation-reflecting surface so that filter reflects visible light, but allows radiation of a wavelength to which the power generator is sensitive to pass to the power generator.

2. A method according to claim 1, wherein the radiation is supplied through a display behind which the power generator and the filter are arranged.

3. A method according to claim 1 or 2, wherein the filter reflects more than 80% of the radiation in the wave range reflected.

4. A method according to claim 3, wherein the filter allows more than 20% of the radiation to which the power generator is sensitive to pass to the power generator.

5. A method according to any of the preceding claims, wherein infrared radiation, preferably in the wave range of 750 to 1100 nm, is passed through the filter to the power generator.

6. A method according to any of the preceding claims, wherein radiation in the wave range of 300 to 750 nm is reflected by the wavelength-dependent radiation-reflecting surface of the filter.

7. A method according to any of the preceding claims, wherein the wavelength-dependent radiation-reflecting surface of the filter is a cold mirror.

8. A radiation-sensitive power generator (7), such as a solar cell, provided with a radiation filter (6,6') having a wavelength-dependent radiation-reflecting surface, the filter reflecting visible light, but allowing radiation of a wavelength to which the power generator is sensitive to pass to the power generator.

9. A power generator according to claim 8, wherein the filter reflects more than 80% of the radiation in the wave range reflected.

10. A power generator according to claim 9, wherein the filter allows more than 20% of the radiation to which the power generator is sensitive to pass to the power generator.

11. A power generator according to any of claims 8-10, wherein radiation in the wave range of 750 to 1100 nm is passed through the filter to the power generator.

12. A power generator according to any of claims 8-11, wherein radiation in the wave range of 300 to 750 nm is reflected by the wavelength-dependent radiation-reflecting surface of the filter.

13. A power generator according to any of claims 8-12, wherein the wavelength-dependent radiation-reflecting surface of the filter is a cold mirror.

14. An electronic display (2, 5) and/or apparatus having such display for displaying signs, graphics, pictures, symbols etc. and a radiation-sensitive power generator, for example in the form of at least one solar cell arranged behind the display, which is at least partially translucent, characterised in that between the display (2, 5) and the solar cell or cells (7) there is arranged a radiation filter (6, 6').

15. A display according to claim 14, characterised in that the display is an LCD display (5) and that the filter is a plane filter (6, 6') arranged behind the display and having a wavelength-dependent radiation-reflecting surface, preferably on the side facing the display.

16. A display according to claim 14 or 15, characterised in that the solar cell or cells (6, 6') is/are plate-shaped and has/have an area which is smaller than or equal to the area of the display.

17. A display according to claim 14 or 15, characterised in that the filter is a semi-conducting radiation filter with a transmission loss which is less than 20% within the wave range of 750-1100nm and a reflection of more than 80% within the wave range of 300-750nm.

18. A display according to any one of claims 14-17, characterised in that the filter (6') has been directly applied, for example vapour-deposited, on the rear side of the display (2, 5) or a translucent plate behind the display.

19. A display according to any one of claims 14-18, characterised in that the display (2, 5) and the solar cell or cells (7) are designed as one integral unit (fig. 3).

20. A display according to claim 19, characterised in that the integral unit (fig. 3) comprises a wavelength-dependent radiation filter (6') arranged between the display (2, 5) and the solar cell or cells (7).

21. An electronic apparatus according to claim 14, characterised in that it further comprises a store for electric energy, for example a condenser battery or a rechargeable battery.

## Patentansprüche

1. Verfahren zum Betrieb einer strahlungssensitiven Stromerzeugungsvorrichtung wie einer Solarzelle, bei dem ihr Strahlung durch ein Strahlungsfilter mit einer wellenlängenabhängigen strahlungsreflektierenden Oberfläche zugeführt wird, so daß das Filter sichtbares Licht reflektiert, aber gestattet, daß Strahlung mit einer Wellenlänge, für die die Stromerzeugungsvorrichtung sensitiv ist, zur Stromerzeugungsvorrichtung gelangt.

2. Verfahren nach Anspruch 1,
bei dem die Strahlung durch ein Display hindurchgeleitet wird, hinter dem die Stromerzeugungsvorrichtung und das Filter angeordnet sind.

3. Verfahren nach einem der Ansprüche 1 oder 2,
bei dem das Filter mehr als 80 % der Strahlung in dem reflektierten Strahlungsbereich reflektiert.

4. Verfahren nach Anspruch 3,
bei dem das Filter gestattet, daß mehr als 20 % der Strahlung, für die die Stromerzeugungsvorrichtung sensitiv ist, zu der Stromerzeugungsvorrichtung gelangt.

5. Verfahren nach einem der vorstehenden Ansprüche,
bei dem infrarote Strahlung, bevorzugt mit der Wellenlänge von 750 - 1100 nm durch das Filter hindurch zu der Stromerzeugungsvorrichtung gelangt.

6. Verfahren nach einem der vorstehenden Ansprüche,
bei dem die Strahlung in dem Wellenbereich von 300 - 750 nm von der wellenlängenabhängigen strahlungsreflektierenden Oberfläche des Filters reflektiert wird.

7. Verfahren nach einem der vorstehenden Ansprüche,
bei dem die wellenlängenabhängige strahlungsreflektierende Oberfläche des Filters ein kalter Spiegel ist.

8. Strahlungssensitive Stromerzeugungsvorrichtung (7), wie beispielsweise eine Solarzelle, mit einem Strahlungsfilter (6, 6'), das eine wellenlängenabhängige strahlungsreflektierende Oberfläche besitzt und sichtbares Licht reflektiert, aber gestattet, daß Strahlung mit einer Wellenlänge, für die die Stromerzeugungsvorrichtung sensitiv ist, zu der Stromerzeugungsvorrichtung gelangt.

9. Stromerzeugungsvorrichtung gemäß Anspruch 8,
bei der das Filter mehr als 80 % der Strahlung in dem reflektierten Wellenbereich reflektiert.

10. Stromerzeugungsvorrichtung nach Anspruch 9,
bei der das Filter gestattet, daß mehr als 20 % der Strahlung, für die die Stromerzeugungsvorrichtung sensitiv ist, zu der Stromerzeugungsvorrichtung hindurchgelangt.

11. Stromerzeugungsvorrichtung nach einem der Ansprüche 8 bis 10,
bei der Strahlung in dem Wellenbereich von 750 - 1100 nm durch das Filter zu der Stromerzeugungsvorrichtung hindurchgelangt.

12. Stromerzeugungsvorrichtung nach einem der Ansprüche 8 bis 11,
bei der Strahlung in dem Wellenbereich von 300 - 750 nm von der wellenlängenabhängigen strahlungsreflektierenden Oberfläche des Filters reflektiert wird.

13. Stromerzeugungsvorrichtung nach einem der Ansprüche 8 bis 12,
bei der die wellenlängenabhängige strahlungsreflektierende Oberfläche des Filters ein kalter Spiegel ist.

14. Elektronisches Display (2, 5) und/oder Vorrichtung, die solch ein Display zur Anzeige von Zeichen, Grafik, Bildern, Symbolen etc. und eine strahlungssensitive Stromerzeugungsvorrichtung z.B. in der Form wenigstens einer Solarzelle besitzt, die hinter dem Display angeordnet ist, welches wenigstens teilweise durchsichtig ist,
dadurch gekennzeichnet, daß zwischen dem Display (2, 5) und der Solarzelle oder den Solarzellen (7) ein Strahlungsfilter (6, 6') angeordnet ist.

15. Display nach Anspruch 14,
dadurch gekennzeichnet, daß das Display ein LCD-Display (5) ist und daß das Filter ein ebenes Filter (6, 6') ist, das hinter dem Display angeordnet ist und eine wellenlängenabhängige strahlungsreflektierende Oberfläche besitzt, bevorzugt auf der dem Display zugeneigten Seite.

16. Display nach Anspruch 14 oder 15,
dadurch gekennzeichnet, daß die Solarzelle oder Solarzellen (6, 6') plattenförmig ist/sind und ein Gebiet hat/haben, welches kleiner als das oder gleich dem Gebiet des Displays ist.

17. Display nach Anspruch 14 oder 15,
dadurch gekennzeichnet, daß das Filter ein halbleitendes Strahlungsfilter mit einem Übertragungsverlust ist, welcher weniger als 20 % innerhalb des Wellenbereiches von 750 - 1100 nm beträgt und eine Reflektion von mehr als 80 % innerhalb des Wellenbereiches von 300 - 750 nm aufweist.

18. Display nach einem der Ansprüche 14 bis 17,
dadurch gekennzeichnet, daß das Filter (6') direkt - z.B. durch Aufdampfen - auf der Rückseite des Displays (2, 5) oder einer durchsichtigen Platte hinter dem Display aufgebracht wurde.

19. Display nach einem der Ansprüche 14 bis 18,
dadurch gekennzeichnet, daß das Display (2, 5) und die Solarzelle oder die Solarzellen (7) als eine integrale Einheit (Fig. 3) ausgebildet sind.

20. Display nach Anspruch 19,
dadurch gekennzeichnet, daß die integrale Einheit (Fig. 3) ein wellenlängenabhängiges Strahlungsfilter (6') enthält, das zwischen dem Display (2, 5) und der Solarzelle oder den Solarzellen (7) angeordnet ist.

21. Elektronischer Apparat nach Anspruch 14,
dadurch gekennzeichnet, daß er weiterhin einen Speicher für elektrische Energie enthält, z.B. eine Kondenserbatterie oder eine wiederaufladbare Batterie.

## Revendications

1. Un procédé pour faire opérer un générateur de courant sensible à un rayonnement, tel qu'une pile solaire, comprenant l'amenée d'un rayonnement à celui-ci à travers un filtre de rayonnement ayant une surface réfléchissant le rayonnement en dépendance de la longueur d'onde, de telle sorte que le filtre réfléchit la lumière visible mais permet à un rayonnement d'une longueur d'onde à laquelle le générateur de courant est sensible de passer au générateur de courant.

2. Un procédé selon la revendication 1,
dans lequel le rayonnement est fourni à travers un afficheur derrière lequel sont disposés le générateur de courant et le filtre.

3. Un procédé selon la revendication 1 ou 2,
dans lequel le filtre réfléchit plus de 80% du rayonnement dans la plage de longueurs d'onde réfléchie.

4. Un procédé selon la revendication 3,
dans lequel le filtre permet à plus de 20% du rayonnement auquel le générateur de courant est sensible de passer au générateur de courant.

5. Un procédé selon l'une quelconque des revendications précédentes,
dans lequel on fait passer au générateur de courant, à travers le filtre un rayonnement infrarouge, de préférence dans la plage de longueurs d'onde de 750 à 1100 nm.

6. Un procédé selon l'une quelconque des revendications précédentes,
dans lequel un rayonnement dans la plage de longueurs d'onde de 300 à 750 nm est réfléchi par la surface du filtre réfléchissant le rayonnement en dépendance de la longueur d'onde.

7. Un procédé selon l'une quelconque des revendications précédentes,
dans lequel la surface du filtre réfléchissant un rayonnement en dépendance de la longueur d'onde est un miroir froid.

8. Un générateur de courant (7) sensible au rayonnement, tel qu'une pile solaire, muni d'un filtre de rayonnement (6, 6') ayant une surface réfléchissant un rayonnement en dépendance de la longueur d'onde, le filtre réfléchissant la lumière visible mais permettant à un rayonnement d'une longueur d'onde à laquelle le générateur de courant est sensible de passer au générateur de courant.

9. Un générateur de courant selon la revendication 8, dans lequel le filtre réfléchit plus de 80% du rayonnement dans la plage de longueurs d'onde réfléchie.

10. Un générateur de courant selon la revendication 9, dans lequel le filtre permet à plus de 20% du rayonnement auquel le générateur de courant est sensible de passer au générateur de courant.

11. Un générateur de courant selon l'une quelconque des revendications 8 à 10,
dans lequel on fait passer au générateur de courant, à travers le filtre un rayonnement dans la plage de longueurs d'onde de 750 à 1100 nm.

12. Un générateur de courant selon l'une quelconque des revendications 8 à 11,
dans lequel un rayonnement dans la plage de longueurs d'onde de 300 à 750 nm est réfléchi par la surface du filtre réfléchissant le rayonnement en dépendance de la longueur d'onde.

13. Un générateur de courant selon l'une quelconque des revendications 8 à 12,
dans lequel la surface du filtre réfléchissant un rayonnement en dépendance de la longueur d'onde est un miroir froid.

14. Un afficheur électronique (2,5) et/ou un appareil ayant un afficheur propre à afficher des signes, des graphiques, des images, des symboles, etc. et un générateur de courant sensible à un rayonnement, par exemple sous forme d'au moins une pile solaire disposée derrière l'afficheur, qui est au moins partiellement translucide,
caractérisé en ce qu'un filtre de rayonnement (6, 6') est disposé entre l'afficheur (2,5) et la pile ou les piles solaire(s) (7).

15. Un afficheur selon la revendication 14,
caractérisé en ce que l'afficheur est un afficheur LCD (5) et en ce que le filtre est un filtre plan (6,6') disposé derrière l'afficheur et ayant une surface réfléchissant un rayonnement en dépendance de la longueur d'onde, de préférence du côté faisant face à l'afficheur.

16. Un afficheur selon la revendication 14 ou 15,
caractérisé en ce que la pile solaire ou les piles solaires (6, 6') est/sont en forme de plaque et a/ont une surface qui est inférieure ou égale à la surface de l'afficheur.

17. Un afficheur selon la revendication 14 ou 15,
caractérisé en ce que le filtre est un filtre de rayonnement semi-conducteur avec une perte de transmission qui est inférieure à 20% à l'intérieur de la plage de longueurs d'onde de 750-1100 nm et une réflexion de plus de 80% à l'intérieur de la plage de longueurs d'onde de 300-750 nm.

18. Un afficheur selon l'une quelconque des revendications 14-17,
caractérisé en ce que le filtre (6') a été appliqué directement, par exemple par métallisation sous vide, sur le côté arrière de l'afficheur (2,5) ou d'une plaque translucide derrière l'afficheur.

19. Un afficheur selon l'une quelconque des revendications 14 à 18,
caractérisé en ce que l'afficheur (2,5) et la pile solaire ou les piles solaires (7) sont intégrés en une unité d'une seule pièce (figure 3).

20. Un afficheur selon la revendication 19,
caractérisé en ce que l'unité d'une seule pièce (figure 3) comprend un filtre de rayonnement en dépendance de la longueur d'onde (6') disposé entre l'afficheur (2,5) et la pile solaire ou les piles solaires (7).

21. Un appareil électronique selon la revendication 14,
caractérisé en ce qu'il comprend en outre un accumulateur pour énergie électrique, par exemple une batterie à condensateur ou une batterie rechargeable.
